Europäisches Patentamt

European Patent Office

Office européen des brevets

(19)

(11) **EP 1 429 405 A1**

(12) **EUROPEAN PATENT APPLICATION**
published in accordance with Art. 158(3) EPC

(43) Date of publication:
   **16.06.2004 Bulletin 2004/25**

(51) Int Cl.⁷: **H01M 8/02**

(21) Application number: **01967730.1**

(86) International application number:
   **PCT/JP2001/008148**

(22) Date of filing: **19.09.2001**

(87) International publication number:
   **WO 2003/028132 (03.04.2003 Gazette 2003/14)**

(84) Designated Contracting States:
   **AT BE CH CY DE DK ES FI FR GB GR IE IT LI LU
   MC NL PT SE TR**
   Designated Extension States:
   **AL LT LV MK RO SI**

(71) Applicant: **Mitsubishi Heavy Industries, Ltd.
   Tokyo 100-8315 (JP)**

(72) Inventor: **TSUJI, Tadashi,
   C/O TAKASAGO Machinery Works
   Takasago-shi, Hyogo 676-8686 (JP)**

(74) Representative: **Henkel, Feiler & Hänzel
   Möhlstrasse 37
   81675 München (DE)**

(54) **FUEL CELL DEVICE AND METHOD OF COOLING FUEL CELL**

(57) A fuel cell apparatus is provided with a fuel cell main unit 20A including an electrolyte film 23, an air electrode 24, and a fuel electrode 25, and an electrically conductive member 28 which is electrically connected with said fuel cell main unit. Flow paths S1 for fluid is provided between said fuel cell main unit and said conductive member to cool said fuel cell main unit. Even if a quantity of air to be supplied is reduced, there is no problem of cooling of the fuel cell apparatus.

# Fig. 1

EP 1 429 405 A1

## Description

## Technical Field

The present invention relates to a fuel cell apparatus, and more particularly, to a solid electrolyte type fuel cell (SOFC: Solid Oxide The fuel Cell) apparatus.

## Background Art

In a fuel cell apparatus, there is a case where hydrogen gas is supplied to the fuel cell apparatus just as it is as fuel gas, and there is a case where methane gas is reformed and then is supplied to the fuel cell apparatus as the fuel gas. Also, there is a case where oxygen gas is supplied to the fuel cell apparatus just as it is as oxidant gas, and there is a case where air is supplied to the fuel cell apparatus as the oxidant gas. When air is used as the oxidant gas, the air is compressed by a compressor and then supplied to the fuel cell apparatus.

In the fuel cell apparatus, electric power is generated through the following electrochemistry reaction of the fuel gas and the oxidant gas:

$$C_mH_n+(m+n/4)O_2 \rightarrow mCO_2+(n/2)H_2O$$

Here, oxygen of a fuel equivalent ratio is of the minimum quantity necessary for the above electrochemistry reaction. Because the above electrochemistry reaction is accompanied by the generation of heat, the fuel cell apparatus must be cooled during the operation. In a conventional fuel cell apparatus, air of a quantity of 4 to 5 times of the fuel equivalent ratio is supplied, and the air of the quantity of 3 to 4 times of the fuel equivalent ratio is used for cooling the fuel cell apparatus.

As shown in Fig. 18, a fuel cell apparatus FC is incorporated as a part of a combined power generation plant P in some case. In this plant P, compression air is supplied to the solid electrolyte-type fuel cell apparatus FC by a compressor C, and discharge gas from the solid electrolyte-type fuel cell apparatus FC is used for power generation by a turbine T. The power generation energy quantity X of this plant P is

$$X = WFC + WT - Cp$$

where WFC is a power generation quantity by the fuel cell FC, WT is a power generation quantity by the turbine T and Cp is an energy quantity necessary to drive of the compressor C.

Therefore, if the fuel cell can be sufficiently cooled even if the air which is used only for the cooling is not supplied, the drive ability of the compressor C can be lowered, and the energy quantity Cp necessary to drive the compressor C can be reduced. In this way, if the fuel cell can be sufficiently cooled by supplying the air of the quantity of the fuel equivalent ratio, the efficiency of the whole plant P can be improved. For example, if the whole of the compression air supplied by the compressor C can be used for the electrochemistry reaction of the fuel cell apparatus, the power generation quantity of $(4-5)\cdot WFC$ can be obtained from the fuel cell apparatus. In the whole plant P, the power of the quantity of $((4-5)\cdot WFC+Ea)$ can be obtained.

## Disclosure of Invention

Therefore, an object of the present invention is to provide a fuel cell apparatus which can be efficiently cooled even if a quantity of supplied air is reduced.

Another object of the present invention is to provide a fuel cell apparatus which can improve the efficiency of power generation per unit area.

Still another object of the present invention is to provide a fuel cell apparatus in which an energy quantity necessary to drive a compressor can be reduced so as to increase the efficiency of a plant, when the apparatus is incorporated into a power generation plant.

Yet still another object of the present invention is to provide a cooling method used in the above-mentioned fuel cell apparatus.

In a first aspect, a fuel cell apparatus of the present invention includes a fuel cell main unit including an electrolyte film, an air electrode and a fuel electrode, and an electrically conductive member electrically connected with the fuel cell main unit. Flow paths for fluid is provided between the fuel cell main unit and the conductive member to cool the fuel cell main unit.

In the fuel cell apparatus, the fluid is one of air, fuel supplied to the fuel electrode, mixture of the air and the fuel.

Also, in the fuel cell apparatus of the present invention, a specific surface of the fuel cell main unit may have a contact portion which contacts the conductive member and a non-contact portion which does not contact the conductive member, and the flow path may be formed between the conductive member and the non-contact section.

Also, in the fuel cell apparatus of the present invention, when a first one of the fuel cell apparatus and a second one of the fuel cell apparatus are stacked to be adjacent to each other, the conductive member of the first fuel cell apparatus forms first ones of the flow paths for the fluid to cool one of the air electrodes and the fuel electrodes in the first fuel cell apparatus, and second ones of the flow paths of the fluid to cool the other of the air electrode and the fuel electrode in the second fuel cell apparatus.

In the fuel cell apparatus of the present invention, the first flow path and the second flow path are not always same in capacity, because the surface area and capacity of them are determined based on a cooling heat transfer area and a heat transfer design.

In the fuel cell apparatus of the present invention, one of the fuel cell main unit and the conductive member are formed to have almost a waveform, the other of the fuel cell main unit and the conductive member is formed in a flat plate shape.

The first and second fuel cell apparatuses are stacked such that a first wave corresponding to the one of the fuel cell main unit and the conductive member in the first fuel cell apparatus has the same phase as a second wave corresponding to the one of the fuel cell main unit and the conductive member in the second fuel cell apparatus.

In the fuel cell apparatus of the present invention, the first and second fuel cell apparatuses are stacked such that the phase of the first wave and the phase of the second wave are shifted by 180 degrees.

In the fuel cell apparatus of the present invention, holes are formed in the conductive member to connect the first flow path and the second flow pat.

In the fuel cell apparatus of the present invention, a first direction when the fluid flows through the first flow path is same as a second direction when the fluid flows through the second flow path.

In the fuel cell apparatus of the present invention, a first direction when the fluid flows through the first flow path may be opposite to a second direction when the fluid flows through the second flow path.

In the fuel cell apparatus of the present invention, the fluid may flow through the first flow path in a first direction, and then flow through the second flow path in a second direction which is opposite to the first direction.

In the fuel cell apparatus of the present invention, the flow path is divided into a first region and a second region, and the fluid may flow through the first region in a first direction, and then flow through a second region in a second direction which is opposite to the first direction.

In the fuel cell apparatus of the present invention, a division member is provided for the flow path to divide the flow path into a first region and a second region, and a shape of an opening of the flow path is almost common to an external shape of the division member exposed from the opening to keep the shape of the opening of the flow path.

In the fuel cell apparatus of the present invention, the first fluid flows through the first flow path flows and then flows into the one of the air electrode and the fuel electrode in the first fuel cell apparatus, and the second fluid flows through the second flow path and then flows into the other of the air electrode and the fuel electrode in the second fuel cell apparatus. The first fluid is fluid necessary for the fuel cell to react in the one, and the second fluid is fluid necessary for the fuel cell to react in the other.

In the fuel cell apparatus of the present invention, each of the first and second flow paths is divided into a first region and a second region, the first fluid flows into the first region of the first flow path in a first direction and then flows into the second region of the first flow path in a second direction which is opposite to the first direction, when the first fluid flows through the first flow path, and the second fluid flows into the first region of the second flow path in a third direction and then flows into the second region of the second flow path in a fourth direction which is opposite to the third direction, when the first fluid flows through the first flow path.

In the fuel cell apparatus of the present invention, a temperature of the first fluid is set to a first set temperature such that a first temperature when the first fluid flows through the first flow path and is heated through cooling the one is equal to the first setting temperature, and a temperature of the second fluid is set to a second set temperature such that a second temperature when the second fluid flows through the second flow path and is heated through cooling the other is equal to the second setting temperature.

A method of cooling a fuel cell of the present invention, includes the steps of (a) providing a fuel cell includes an electrolyte film, an air electrode and a fuel electrode; (b) forming a first flow path in a position on a side of the air electrode; (c) forming a second flow path in a position on a side of the fuel electrode; (d) supplying air to the first flow path to cool the air electrode; (e) supplying fuel to the second flow path to cool the fuel electrode; (f) supplying the air used to cool the air electrode to the air electrode to directly use for reaction of the fuel cell; (g) supplying the fuel used to cool the fuel electrode to the fuel electrode to directly use for reaction of the fuel cell; (h) setting a temperature of the air supplied to the first flow path in the step (d) to a temperature which is suitable for the use in the step (f); and (i) setting a temperature of the fuel supplied to the second flow path in the step (e) to a temperature which is suitable for the use in the step (g).

**Brief Description of Drawings**

Fig. 1 is a cross sectional view showing the structure of a unit cell of a fuel cell apparatus according to the first embodiment of the present invention;

Fig. 2A are a cross sectional view showing a first modification of the unit cell structure of the fuel cell apparatus in the first embodiment;

Fig. 2B is a cross sectional view showing a second modification of the unit cell structure of the fuel cell apparatus in the first embodiment;

Fig. 2C is a cross sectional view showing a third modification of the unit cell structure of the fuel cell apparatus in the first embodiment;

Fig. 2D is a cross sectional view showing a fourth modification of the unit cell structure of the fuel cell apparatus in the first embodiment;

Fig. 3 is a perspective view showing the structure of the fuel cell apparatus of the present invention;

Fig. 4 is a diagram showing the operation principle of the unit cell of the fuel cell apparatus of the present invention;

Fig. 5A is a cross sectional view showing the first stacking state of the unit cell of the fuel cell apparatus in the first embodiment;

Fig. 5B is a cross sectional view showing a second stacking state of the unit cell of the fuel cell apparatus in the first embodiment;

Fig. 5C is a cross sectional view showing a third stacking state of the unit cell of the fuel cell apparatus in the first embodiment;

Fig. 5D is a cross sectional view showing a fourth stacking state of the unit cell of the fuel cell apparatus in the first embodiment;

Fig. 5E is a cross sectional view showing a fifth stacking state of the unit cell of the fuel cell apparatus in the first embodiment;

Fig. 5F is a cross sectional view showing a sixth stacking state of the unit cell of the fuel cell apparatus in the first embodiment;

Fig. 6A is a perspective view showing the structure of a waveform section of the unit cell of the fuel cell apparatus according to the first embodiment of the present invention;

Fig. 6B is a perspective view showing another example of the structure of the waveform section of the unit cell of the fuel cell apparatus in the first embodiment;

Figs. 6C-1 to 6C-4 are diagrams showing the other examples of the structure of the waveform section of the unit cell in the fuel cell apparatus according to the first embodiment of the present invention;

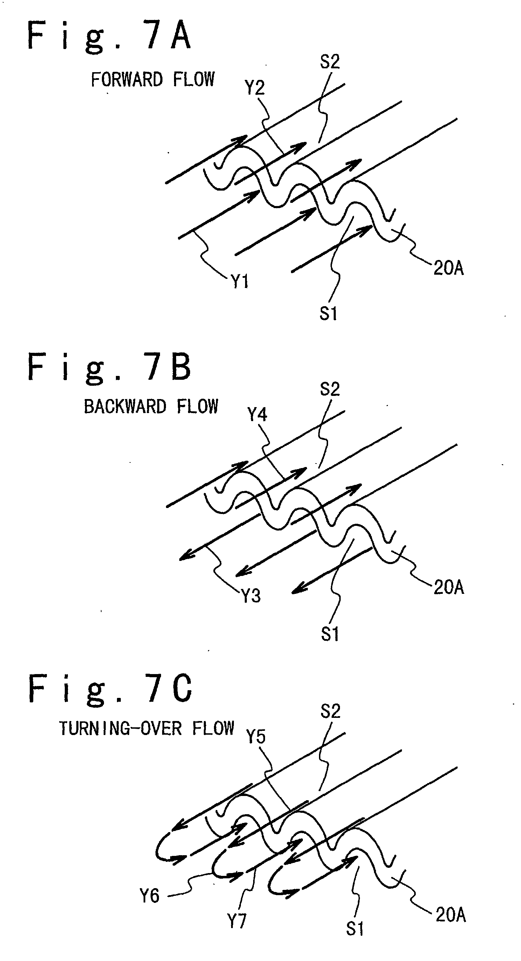

Fig. 7A is a perspective view showing the forward flow of cooling fluid into the fuel cell apparatus according to the first embodiment of the present invention;

Fig. 7B is a diagram showing a opposite flow of the cooling fluid into the fuel cell apparatus according to the first embodiment of the present invention;

Fig. 7C is a perspective view showing a turning-over flow of the cooling fluid into the fuel cell apparatus according to the first embodiment of the present invention;

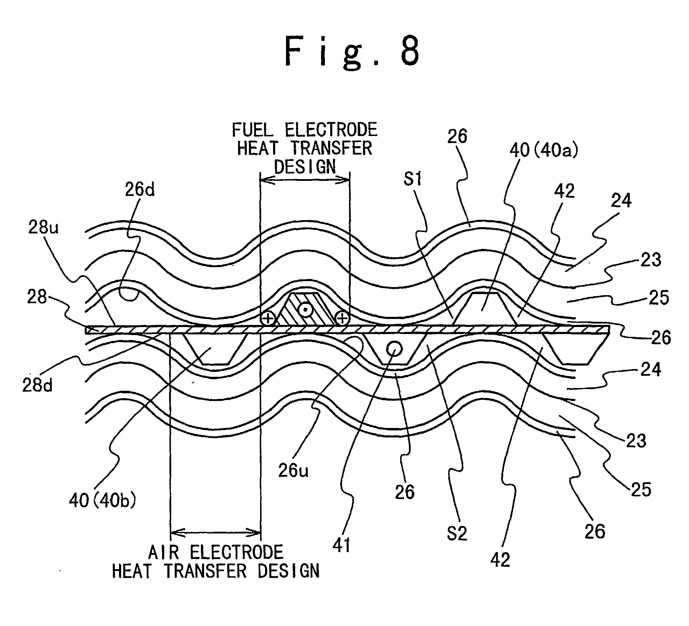

Fig. 8 is a side view showing a state that an assembly segment support is applied to the fuel cell apparatus according to the first embodiment of the present invention;

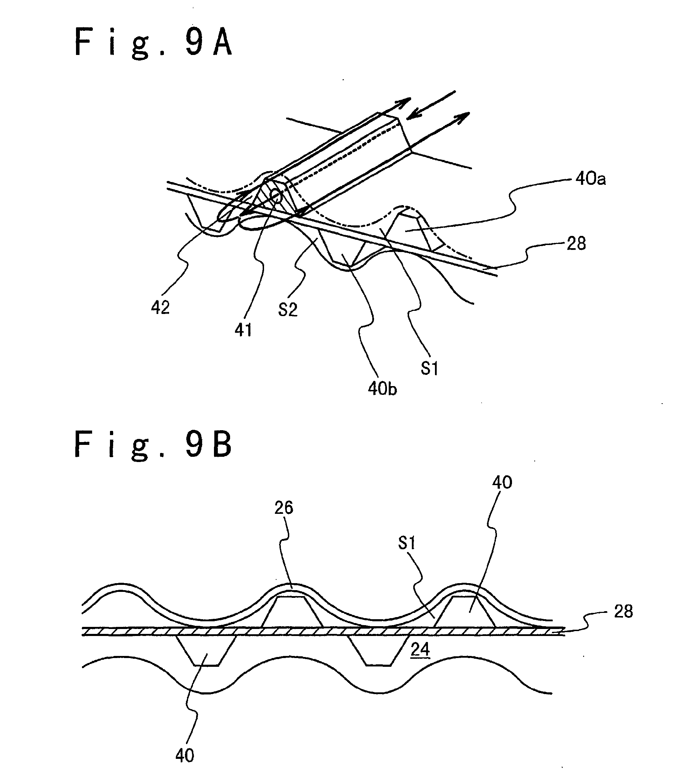

Fig. 9A is a perspective view showing the flow of the cooling fluid in Fig. 8;

Fig. 9B is a side view showing another state that the assembly segment support is applied to the fuel cell apparatus according to the first embodiment of the present invention;

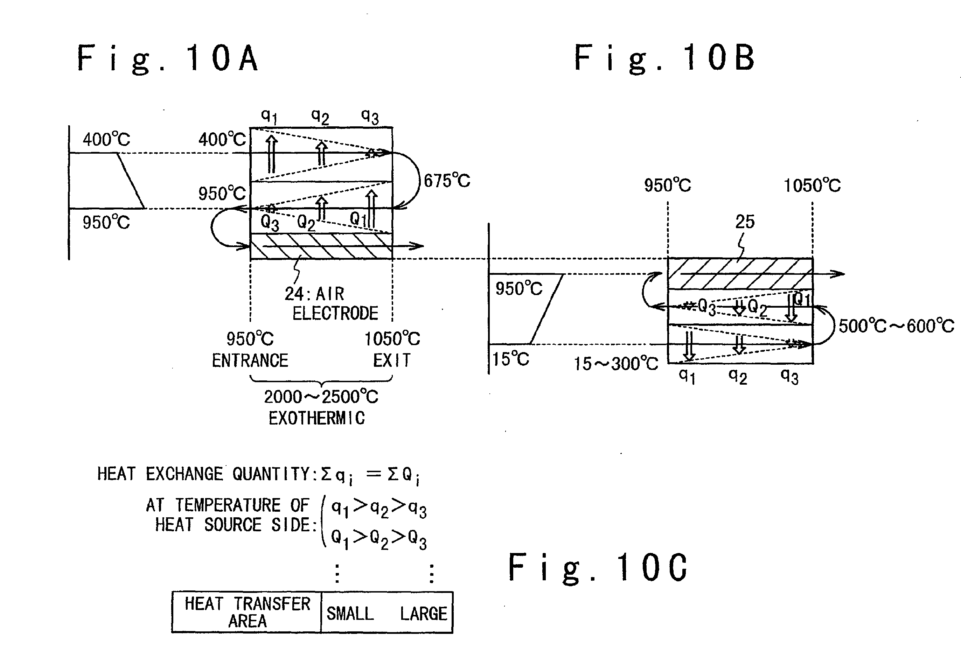

Fig. 10A is a diagram showing a state that cooling air turned over in flow paths is supplied to an air electrode, in the fuel cell apparatus according to the first embodiment of the present invention;

Fig. 10B is a diagram showing a state that the fuel gas turned over in the flow paths is supplied to an fuel electrode, in the fuel cell apparatus according to the first embodiment of the present invention;

Fig. 10C is a diagram showing relation of heat transfer area of the cooling fluid;

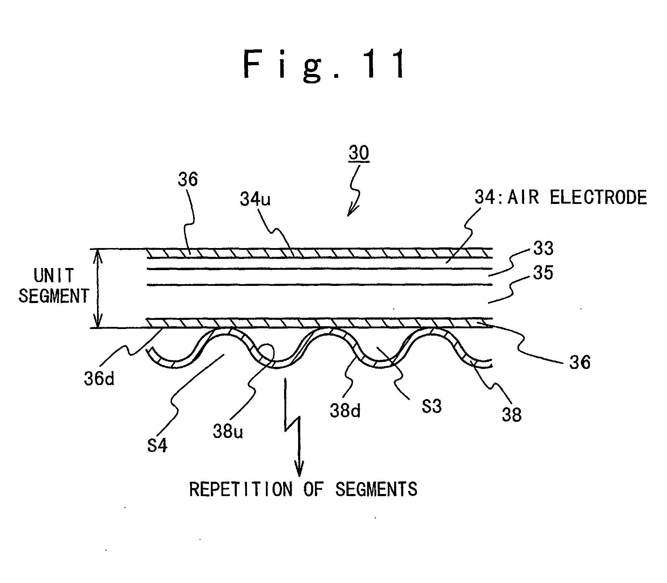

Fig. 11 is a cross sectional view showing the structure of the unit cell of the fuel cell apparatus according to a second embodiment of the present invention;

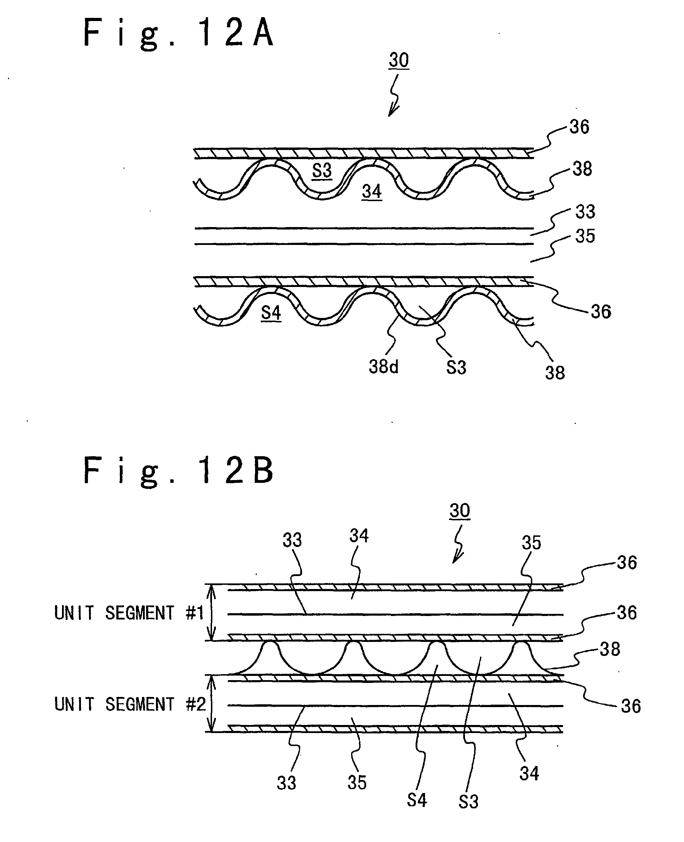

Fig. 12A is a cross sectional view showing a first modification of the structure of a unit cell of a fuel cell apparatus according to the second embodiment of the present invention;

Fig. 12B is a cross sectional view showing a second modification of the unit cell structure of the fuel cell apparatus according to the second embodiment of the present invention;

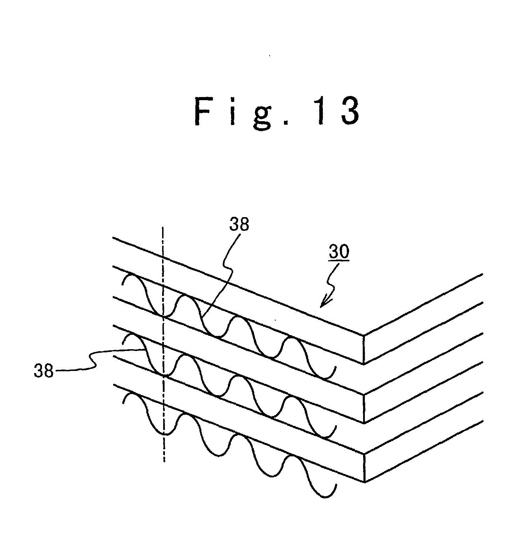

Fig. 13 is a perspective view showing a stacking state of the unit cell of the fuel cell apparatus according to a third embodiment of the present invention;

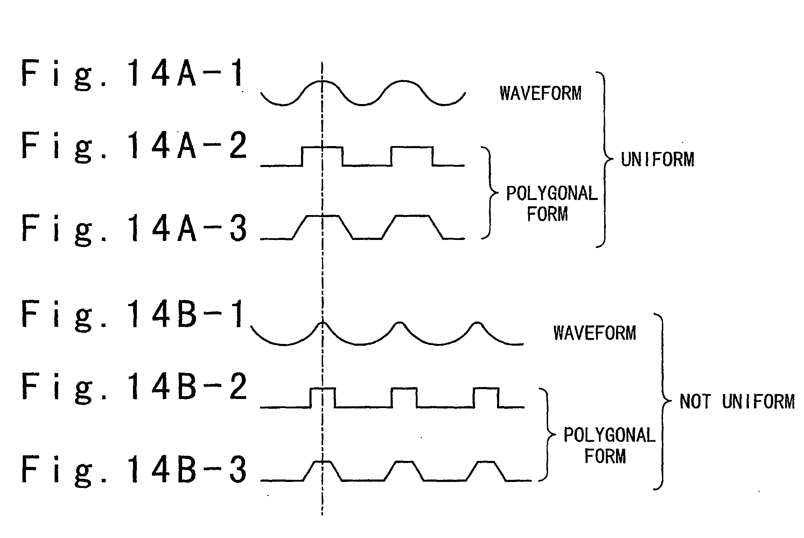

Figs. 14A-1 to 14A-3 are side views schematically showing the shapes of segment support members in the fuel cell apparatus according to a fourth embodiment of the present invention;

Figs. 14B-1 to 14B-3 are side view showing schematically the other shapes of the segment support members in the fuel cell apparatus according to the fourth embodiment of the present invention; and

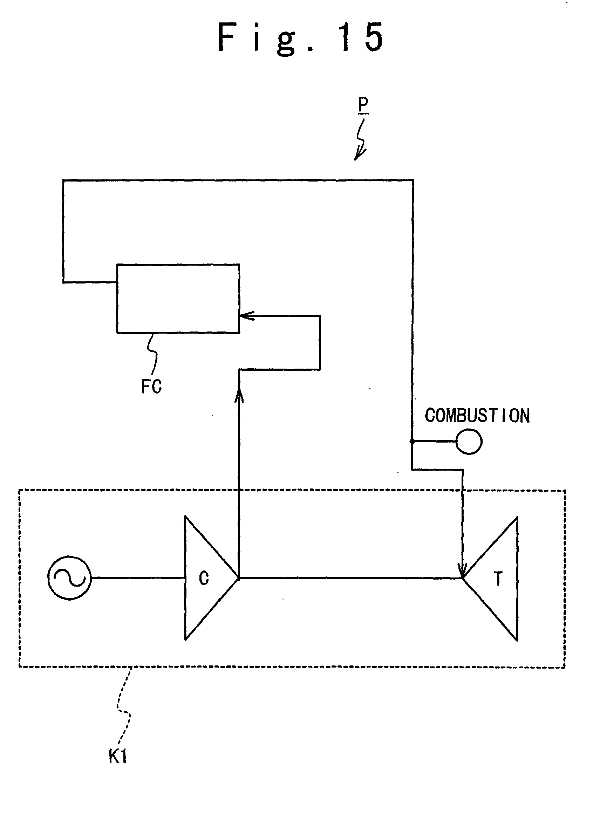

Fig. 15 is a block diagram schematically showing the structure of the plant to which the fuel cell apparatus of the present invention is applied.

**Best Mode for Carrying Out the Invention**

A fuel cell apparatus of the present invention will be described below in detail with reference to the attached drawings.

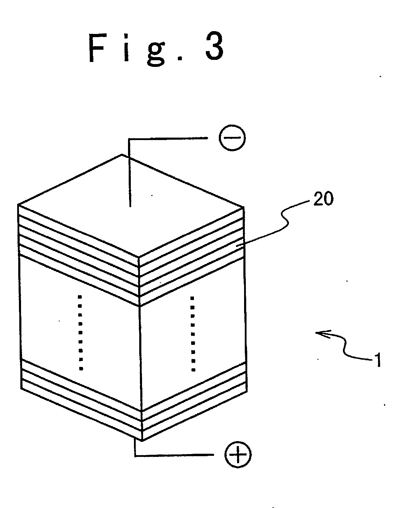

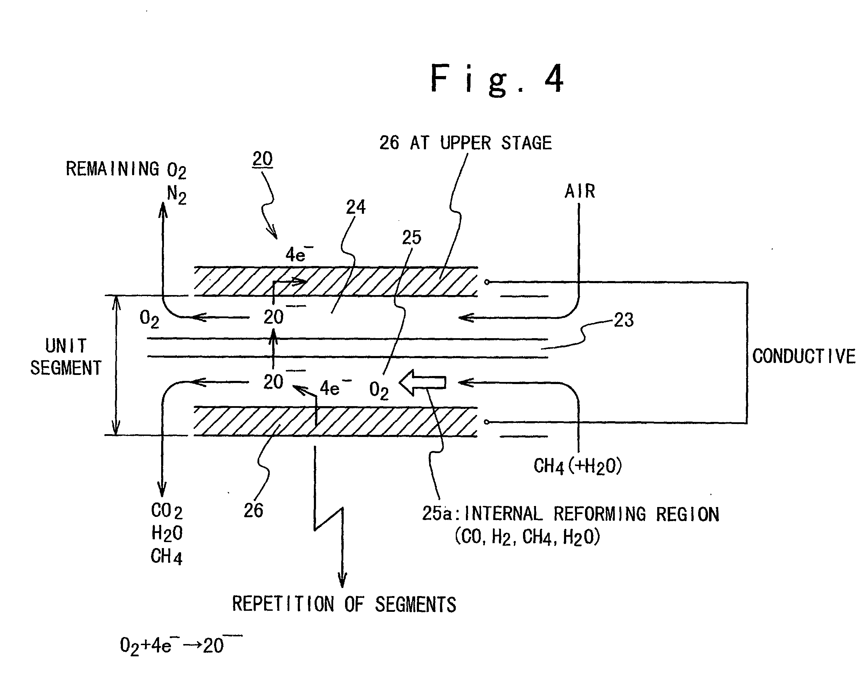

First, Fig. 3 is a perspective view showing the structure of the fuel cell apparatus of the present invention. Referring to Fig. 3, in the fuel cell apparatus 1, a plurality of unit cells 20 are stacked, i.e., are connected in series. As shown in Fig. 4, a unit cell (unit segment) 20 has an electrolyte film 23, an air electrode 24 and a fuel electrode 25 between which the electrolyte film 23 is put, and an inter-connector 26. The best film in the present situation, for example, a solid electrolyte film comprised of yttria stabilization zirconia (YSZ) is used as the electrolyte film 23. Air is supplied to the air electrode 24 by a compressor. Oxygen in the air is used as oxidant gas. Hydrogen gas is supplied to the fuel electrode 25. The hydrogen gas is made by reforming methane ($CH_4$) as original fuel. The following reforming reaction progresses in the reforming region 25a of the fuel electrode 25 by applying steam to methane at high temperature:

$$CH_4 + 2H_2O \rightarrow 4H_2 + CO_2$$

The hydrogen rich gas (e.g., including hydrogen of 75%, carbon monoxide of 15%, and carbon dioxide of about 8%) is obtained through the reforming reaction. The reforming reaction is a reaction which needs heat (endothermic reaction). In case of the reforming of methane, the reforming region 25a must be in the temperature of 750 to 950 degrees. The reforming region may not be provided in the unit cell but provided outside the unit cell. The inter-connector 6 is a partition between unit cells 20. The inter-connector 6 has a function to prevent that the air supplied to the air electrode 24 and the hydrogen gas supplied to the fuel electrode 25 are mixed when the unit cells 20 are stacked. Also, the inter-connector 6 has a function as a conductor to electrically connect the unit cells 2 in series.

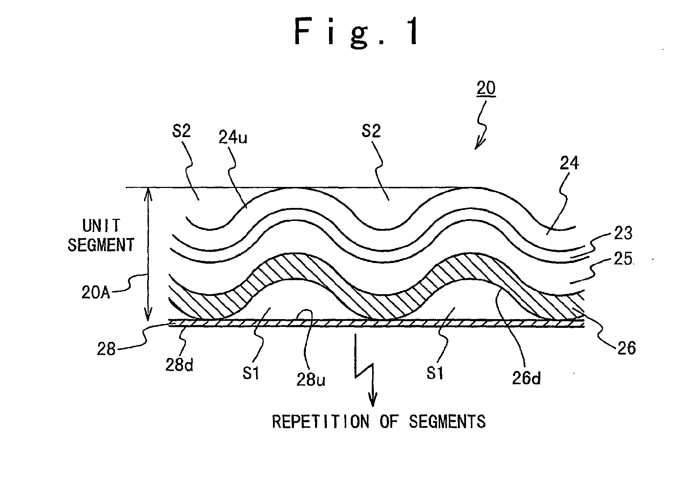

Next, Fig. 1 is a cross sectional view showing the structure of the unit cell 20 of the fuel cell apparatus 1 according to the first embodiment of the present invention. Referring to Fig. 1, the unit cell 20 has an electrolyte film 23, the air electrode 24 and the fuel electrode 25 between which the electrolyte film 23 is put, the inter-connector 26 and a segment support member 28. The unit cells 20 are stacked to form the fuel cell apparatus 1. In the fuel cell apparatus of the first embodiment, the electrolyte film 23, the air electrode 24, the fuel electrode 25 and the inter-connector 26 are formed as a unitary body, which is called the waveform structural section 20A. The waveform structural section 20A is formed to have a continuous waveform with a period and an amplitude (almost sine wave).

The segment support member 28 is provided under the inter-connector 26 formed to have the waveform. The segment support member 28 has a function to partition the unit cells 20 and a function to electrically connect the unit cells 20 in series. The unit cells 20 which are adjacent to each other are electrically connected by contact points between the upper surface 28u of the segment support member 28 and the lower surface 26d of the inter-connector 26 and contact points between the lower surface 28d of the segment support member 28 and the upper surface 24u of the air electrode 24.

The upper surface 28u of the segment support member 28 contacts a part of the lower surface 26d of the inter-connector 26. A flow path S1 is formed in a non-contact portion between the segment support member 28 and the inter-connector 26. The flow path S1 extends in the unit cell 20 in parallel to the surface of electrolyte film 23. Also, the lower surface 28d of the segment support member 28 of the unit cell 20 in the upper stage contacts a part of the upper surface 24u of the air electrode 24. A flow path S2 is formed in a non-contact portion between the segment support member 28 of the unit cell 20 in the upper stage and the upper surface 24u of the air electrode 24. The flow path S2 extends in the unit cell 20 in parallel to the surface of electrolyte film 23. The flow path S2 is formed above a region between the flow paths S1 in the first embodiment.

Either fluid of air, original fuel (methane), steam and a mixture of the original fuel is supplied to the flow path S1. The fluid supplied to the flow path S1 cools the fuel electrode 25 indirectly through the inter-connector 26. Also, either fluid of air, original fuel (methane), steam and a mixture of the original fuel is supplied to the flow path S2. The fluid supplied to the flow path S2 cools the air electrode 24. The kind of the fluid which flows through the flow path S1 and the kind of the fluid which flows through the flow path S2 may be identical or may be different.

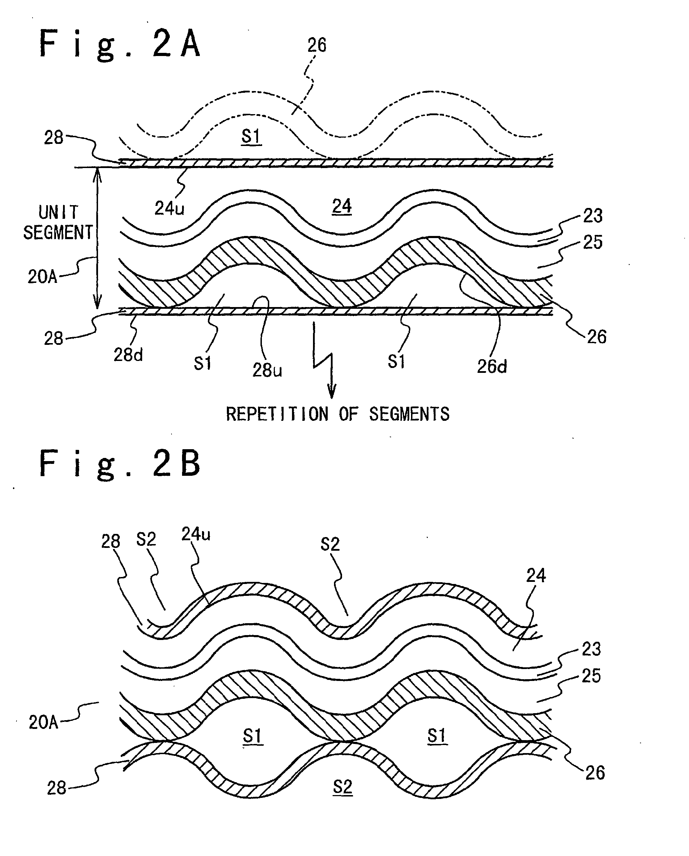

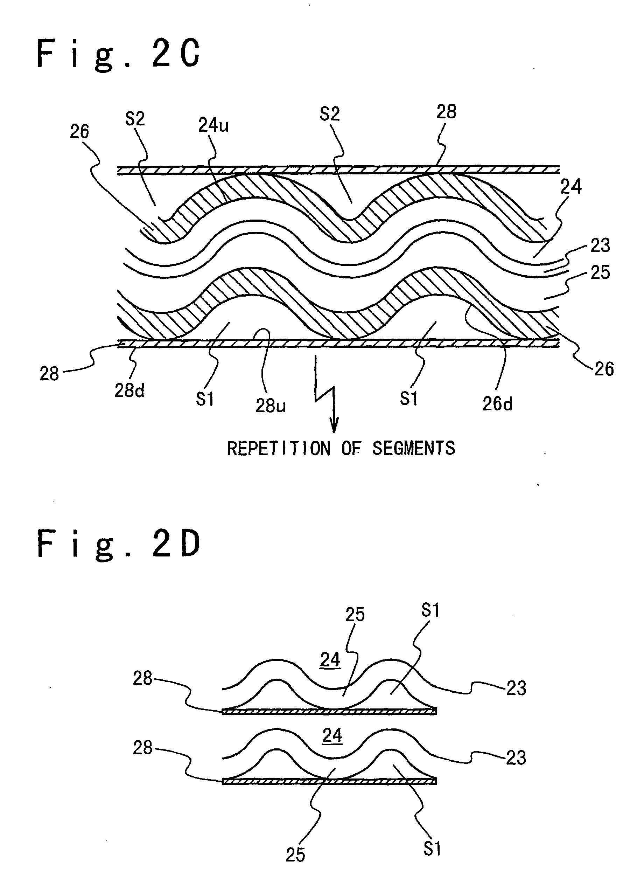

Fig. 2A is a cross sectional view showing a first modification of the unit cell structure of the fuel cell apparatus in the first embodiment. Referring to Fig. 2A, the segment support member 28 is formed in a flat plate shape. When the section shape of the air electrode 24 is made free, the outer surface 24u of the air electrode 24 may have the same shape as the inter-connector 26 or the segment support member 28 of the unit cell 20 on the upper stage. That is, in the first modification of the unit cell, the air electrode 24 does not contact the segment support member 28 of the unit cell 20 in the upper stage, unlike the unit cell of the fuel cell apparatus in the first embodiment. For this reason, the flow path S2 is not formed. The electrolyte film 23, the air electrode 24, the fuel electrode 25 and the inter-connector 26 are made as a unitary body, which is called the waveform structural section 20A.

Fig. 2B is a cross sectional view showing a second modification of the unit cell structure of the fuel cell apparatus in the first embodiment. As shown in Fig. 2B, in the second modification of the unit cell 20, the unit cell has an upper segment support member 28 and a lower segment support member 28. The upper segment support member 28, the electrolyte film 23, the air electrode 24, the fuel electrode 25 and the lower inter-connector 26 are made as a unitary body, which is called the waveform structural section 20A. The lower surface of the upper segment support member 28 is formed to have the same shape as the upper surface 24u of the air electrode 24. In this way, the lower surface of the upper segment support member 28 contacts the upper surface 24u of the air electrode 24 of the unit cell 20 in the whole portion. The waveform phase of the upper segment support member 28 is same as that of the electrolyte film 23. However, the waveform phase of the lower segment support member 28 shifts from the waveform phase of the upper segment support member 28 by 180 degrees (a half period). In this way, the upper surface of the lower segment support member 28 is formed to contact the lower surface of the inter-connector 26 partially. The flow path S1 is formed in the non-contact portion between the lower segment support member 28 and the inter-connector 26. The flow path S2 is formed by the lower segment support member 28 of the unit cell 20 in the upper stage and the upper segment support member 28 of the unit cell 20 in the low stage by stacking the unit cells 20.

It should be noted that the upper segment support member 28 may be formed as the lower segment support member 28 of the unit cell in the upper stage, of course. In this case, the shape of the lower segment support member 28 is different for every two stages.

Fig. 2C is a cross sectional view showing a third modification of the unit cell structure of the fuel cell apparatus in the first embodiment. Referring to Fig. 2C, the third modification of the unit cell 20 has the upper inter-connector 26 and the lower inter-connector 26. The upper inter-connector 26, the electrolyte film 23, the air electrode 24, the fuel electrode 25 and the lower inter-connector 26 are made as a unitary body, which is called the waveform structural section 20A. The lower surface of the upper inter-connector 26 is formed to have the same shape as the upper surface 24u of the air electrode 24. In this way, the lower surface of the upper inter-connector 26 is formed to contact the upper surface 24u of the air electrode 24 of the unit cell 20 in the whole portion. The waveform phase of the upper inter-connector 26 is the same as that of the electrolyte film 23, and that of the lower inter-connector 26. In this way, the lower surface of the lower inter-connector 26 is formed to contact the lower surface of the fuel electrode 25 in the whole surface. By stacking the unit cells 20, the flow path S2 is formed by the non-contact portion between the segment support member 28 of the unit cell in the upper stage and the upper inter-connector 26. Also, the flow path S1 is formed in the non-contact portion between the lower inter-connector 26 of the unit cell 20 and the segment support member 28.

Fig. 2D is a cross sectional view showing a fourth modification of the unit cell structure of the fuel cell apparatus in the first embodiment. Referring to Fig. 2D, in the fourth modification of the unit cell 20, the inter-connector 26 is not used. The electrolyte film 23, the air electrode 24 and the fuel electrode 25 are made as a unitary body, which is called the waveform structural section 20A. The surface of the air electrode 24 is flat and contacts the segment support member 28 of the unit cell 20 in the upper stage in the whole surface. The fuel electrode 25 contacts the segment support member 28 partially. In this way, the flow path S1 is formed in the non-contact portion between the fuel electrode 25 and the segment support member 28. Conventionally, the unit cell 20 is cooled by air supplied to the air electrode 4 and having 4 to 5 times of equivalent ratio in the structure shown in Fig. 4, as mentioned above. In this embodiment, the unit cell 20 is cooled by the above fluid supplied to the flow paths S1 and S2. In the fuel cell apparatus of the first embodiment, the section shapes of the flow paths S1 and S2 formed by the waveform structural section 20A formed to have the waveform and the segment support member 28 formed to have a flat form are formed to have almost a semicircular shape or a secondary curve shape. Therefore, the contact cross section when the above fluid in the flow paths S1 and S2 cools the unit cell 20 is large. Therefore, it is possible to reduce the energy necessary to drive the compressor, compared with the conventional example, and the efficiency of the power generation is improved as the whole plant.

As shown in Fig. 1, the electrolyte film 23, the air electrode 24 and the fuel electrode 25 are formed to have the waveform in the unit cell 20. Therefore, the area of the electrolyte film of the fuel cell apparatus, i.e., the reaction area is larger than the area when seeing the unit cell 20 from above. Therefore, the larger output can be obtained from the fuel cell apparatus.

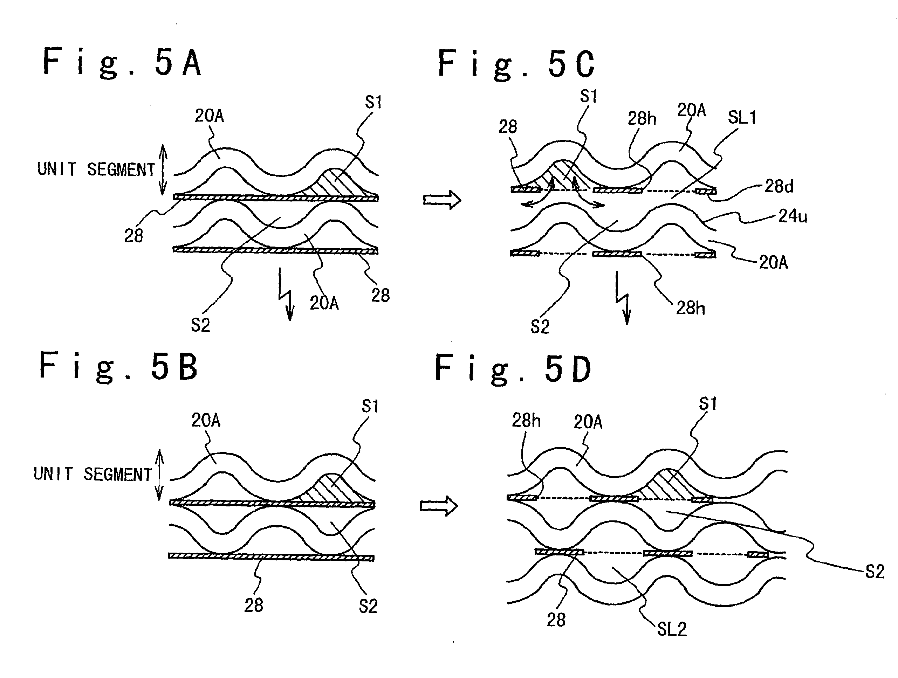

Next, referring to Figs. 5A to 5D, the stacking form of the unit cells 20 will be described. In Figs. 5A to 5D, only the waveform structural section 20A is shown. The inter-connector may be formed on the air electrode, and may not be formed. Also, the inter-connector may be formed under the fuel electrode, or may not be formed. In the following examples, the description is given, supposing that the inter-connector is not to be formed. However, it could be understood that the inter-connector may be formed on the air electrode or under the fuel electrode.

As shown in Fig. 5A, the adjacent unit cells 20 can be stacked such that those waveform structural sections 20A have substantially the same phase. In this example, the air electrode of the waveform structural section 20A contacts the lower surface of the segment support member 28 in the upper stage, and the fuel electrode contacts the upper surface of the segment support member 28. Also, as shown in Fig. 5B, the adjacent unit cells 20 may be stacked such that those waveform structural sections 20A have different phases by about 180 degrees, resulting from the plover-like shape. In this example, the air electrode of the waveform structural section 20A contacts the lower surface of the segment support member 28 in the upper stage, and the fuel electrode contacts the upper surface of the segment support member 28.

Fig. 5C shows a modification of the structure shown in Fig. 5A. A plurality of holes 28h are formed in the segment support member 28 corresponding to the part where the fuel electrode of the waveform structural section 20A of the unit cell 20 does not contact the segment support member 28. Also, the air electrode does not contact the segment support member 28 in the upper stage in a region shown in the figure. However, in a region which is not shown in the figure, the air electrode is electrically connected with the segment support member 28 in the upper stage. Because the holes 28h are formed in the segment support member 28, the partition disappears between the above fluid supplied to the flow path S1 and the above fluid supplied to the flow path S2, and the adjacent unit cells 20 are cooled by a mixture of the above fluids. Because the partition disappears between the flow path S1 and the flow path S2, the cross section of the flow path expands. A symbol SL1 shows this expanded flow path.

In the structure of Fig. 5D, the waveform structural sections 20A of the unit cells 20 are arranged in such a manner that the phases are different by 180 degrees in the upper and lower stages. The air electrode of the waveform structural section 20A in the lower stage contacts the lower surface of the segment support member 28 of the unit cell in the upper stage partially. The fuel electrode of the waveform structural section 20A in the lower stage contacts the upper surface of the segment support member 28 of the same stage partially. In this way, the flow paths S1 and S2 are connected through the holes 28h formed in the segment support member 28, and the cross section of the flow path expands. The symbol SL2 shows this expanded flow path.

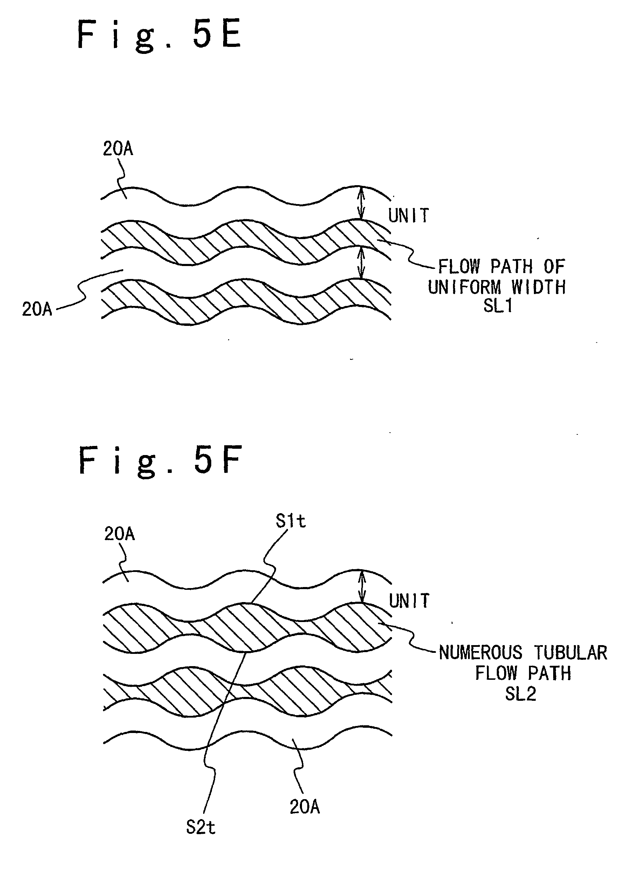

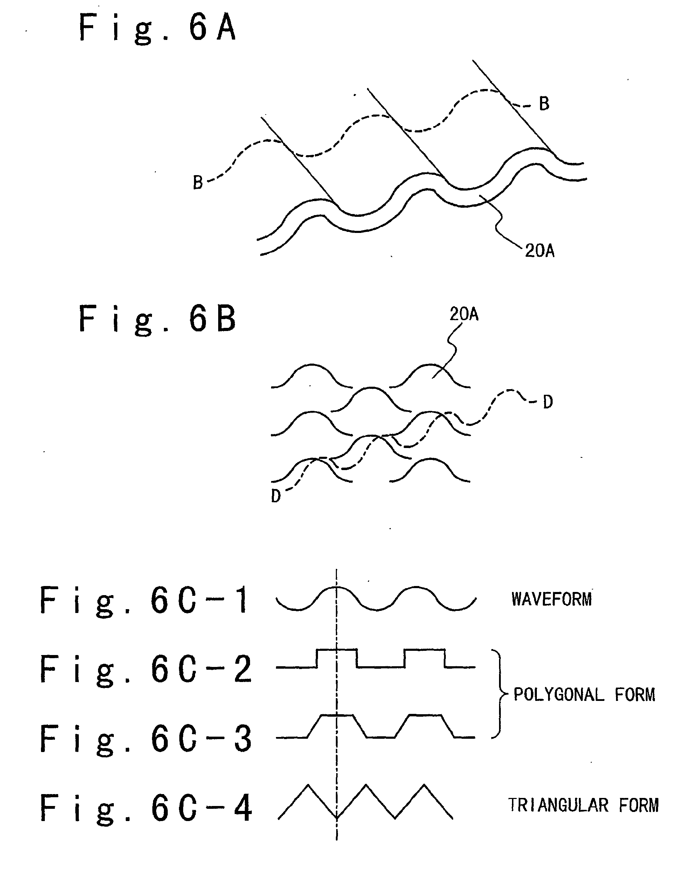

Fig. 5E schematically shows the expanded flow path SL1 of Fig. 6(c). As shown in Fig. 5E, the expanded flow path SL1 is formed to have substantially the same phase as the wave at the waveform structural section 20A shown in Fig. 5C. The width in the direction of the section (the opening) is almost uniform at any part in the direction of the forming of the wave (the direction of the side).

Fig. 5F schematically shows the expanded flow path SL2 of Fig. 5D. As shown in Fig. 5F, the unit cells are arranged such that the top portion Slt of the section shape of the flow path S1 is coincident with the top section S2t of the section shape of the flow path S2 in the upper and lower directions. Therefore, the width of the expanded flow path SL2 in the section direction is not uniform and formed as a numerous tubular shape. In the flow paths SL2 and SL2 adjacent to each other, the unit cells are arranged such that tubular parts of the respective flow paths SL2 (wide portion) are alternate.

Fig. 6A is a perspective view showing the structure of the waveform structural section 20A of the unit cell of the fuel cell apparatus according to the first embodiment of the present invention. As shown in Fig. 6A, the waveform structural section 20A can be formed like a waveform sheet. In this case, the waveform of the waveform structural section 20A shown in Fig. 1 can be understood as the cross sectional view along the line B-B shown in Fig. 6A. Fig. 6B is a perspective view showing another example of the structure of the waveform section of the unit cell of the fuel cell apparatus in the first embodiment. As shown in Fig. 6B, the waveform structural section 20A can be formed like a board with dimples. In the case, the waveform of the waveform structural section 20A shown in Fig. 1 can be understood as the cross sectional view along the line D-D of Fig. 6B.

In Figs. 6A and 6B, the description is given that the waveform structural section 20A is a sine wave form. However, in replace of the sine wave form, the section shape of the waveform structural section 20A may be a polygonal shape (rectangle (like a pulse), trapezoid) or a triangle, as shown in Figs. 6C-1 to 6C-4. Moreover, the shape is not limited to the one shown in Figs. 6C-1 to 6C-4. All the shapes are permitted, if the flow paths (gaps) for the cooling fluid are formed by the flat segment support members 28.

Next, the flow direction of the above fluid supplied to the flow path S1 and the flow path S2 will be described with reference to Figs. 7A to 7C. As shown by the arrows Y1, Y2 in Fig. 7A, the fluid can be supplied to the respective flow paths S1 and S2 in the identical direction to each other. This state of the flow is called forward flow. Also, as shown by the arrows Y3 and Y4 in Fig. 7B, the above fluid can be supplied to the flow paths S1 and the flow paths S2 in the opposite directions to each other. The above fluid is supplied to the flow path S1 in one direction and is supplied to the flow path S2 in the other direction. This state of the flow is called an opposing flow. Moreover, as shown by the arrows Y5, Y6 and Y7 in Fig. 7C, the above fluid is supplied to the flow path S2 and turned over after passing through the flow path S2 and then is supplied to the flow path S1. The above fluid which is supplied to the flow path S2 in one direction, flows backward by a guide section (not shown) after passing through the flow path S2, and then is supplied to the flow path S1 in the other direction. This state of the flow is called a turning-over flow.

In the forward flow of Fig. 7A and in the opposing flow of Fig. 7B, necessary heat collection is carried out by the flow of the above fluid in one direction. In the turning-over flow of Fig. 7C, the contact time and the contact area with the waveform structural section 20A are secured more, because the above fluid goes and returns. Therefore, when the same quantity of air is supplied, the cooling efficiency is high in the case of the turning-over flow, compared with the case of the forward flow.

Next, the segment support 40 will be described with reference to Fig. 8, and Figs. 9A and 9B. The assembly segment support 40 is provided for each of the upper surface 28u and the lower surface 28d in the segment support member 28. The assembly segment support 40 is formed using material with a high heat transfer factor. The symbol 40a shows the assembly segment support 40 provided for the upper surface 28u. The symbol 40b shows the assembly segment support 40 provided for the lower surface 28d. The assembly segment support 40a is provided for the flow path S1. The assembly segment support 40b is provided for the flow path S2.

The assembly segment support 40 is formed to have a trapezoid section. The flow path 41 is formed along the direction in which the flow path S1 or the flow path S2 extends in the almost center portion of the trapezoid. In the flow path S1, gaps 42 are formed in portions corresponding to the oblique sides of the above trapezoid in the assembly segment support 40a and a portion between the upper side of the assembly segment support 40a and the lower surface 26d of the inter-connector 26. In the flow path S2, gaps 42 are formed in portions between the parts corresponding to the oblique sides and upper side the above trapezoid in the assembly segment support 40b and the upper surface 26u of the inter-connector 26.

As shown in Fig. 9A, in the flow path S1, the above fluid is supplied to the flow path 41 formed in the assembly segment support 40 in one direction. The above fluid is turned over by a guide section (not shown) after passing through the flow path 41 and then is supplied to pass through the gaps 42 of the flow path S1 in the other direction. In the flow path S2, the method of supplying the above fluid is same as the flow path S1.

The shape of the assembly segment support 40 may is not limited to a trapezoidal shape, If it has the above function to turn over the above fluid in a single flow path S1 or flow path S2. The shape may be one of various shapes such as a square shape, a rectangular shape, a triangular shape, a circular shape, an elliptical shape and a semicircular shape.

The above-mentioned assembly segment support 40 is formed to have the gaps 42 in the portions corresponding to the oblique sides and upper side of the trapezoid, and the lower surface 26d or the upper surface 26u. In place of this, the assembly segment support 40 may be formed to have the gaps 42 in the portions corresponding to the oblique sides of the trapezoid and lower surface 26d or the upper surface 26u, and any gap 42 is not formed in the portion corresponding to the and upper side of the trapezoid, and the lower surface 26d or the upper surface 26u.

With the assembly segment support 40, the number of times of the turning-over of the fluid in single flow path S1 or flow path S2 is described as once in the above. However, the assembly segment support 40 may be formed such that the fluid is turned over plural times.

It should be noted that in the example shown in Fig. 9A, the inter-connector 26 is provided between the fuel electrode 25 and the segment support member 28. However, it may be omitted. Also, as shown in Fig. 9B, the surface of the air electrode 24 is designed to be flat and the inter-connector 26 may be omitted from the upper surface 24u. In this case, the assembly segment support 40 is embedded in the air electrode 24, while contacting the segment support member 28.

Referring to Figs. 10A to 10, a method of heating fluid will be described.

In this method of heating fluid, the above assembly segment support 40 is used. Methane (or a mixture fluid of methane and steam) as the above fluid is supplied to the flow path 41 of the flow path S1. The methane (or mixture fluid) is supplied to the fuel electrode 25 after going and returning in the flow path 41 and gaps 42 of the flow path S1. Air is supplied to the low path 41 in the flow path S2 as the above fluid. The air is supplied to the air electrode 24 after going and returning in the flow path 41 and the gaps 42 of the flow path S2.

Fig. 10A shows the state that the air which has gone and returned in the flow path S2 is supplied to the air electrode 24. Fig. 10B shows the state that the methane which has gone and returned in the flow path S1 is supplied to the fuel electrode 25. As shown in Fig. 10A, the air (e.g., 400 °C) heated by the compressor is supplied to the flow path 41 in the flow path S2. When the air turns over after passing through the flow path 41 and flows into the gaps 42, the temperature of the air has been increased to 675 °C. When being turned over after passing through the gaps 42 and flowing in to the air electrode 24, the air is heated up to 950 °C of the target temperature. The reaction portion of the fuel cell is a heat source in a range of 2000 to 3000 °C, if being not cooled. The air in the gaps 42 cools the air electrode 24. The air in the gaps 42 becomes the heat source of the air in the flow path 41.

As shown in Fig. 10B, the methane at the room temperature (e.g., 15 °C) is supplied to the flow path 41 in the flow path S1. When being turned over after passing through the flow path 41 and flowing into the gaps 42, the temperature of the methane is heated to the temperature of 500 to 600 °C. When being turned over after passing through the gaps 42 and flowing into the fuel electrode 25, the methane is heated up to the target temperature (e.g., 950 °C). The methane in the gaps 42 cools the fuel electrode 25 as a heat source. The methane in the gaps 42 becomes the heat source to the methane in the flow path 41.

As shown in Figs. 10A to 10C, exchange heat quantities Qi and qi is determined from the temperature difference between the heat source and the above air or the above methane (or the mixture fluid). The heat quantity Qi shows the heat quantity supplied from the air electrode 24 or the fuel electrode 25 in the fuel cell apparatus. The heat quantity qi shows the heat quantity transferred from the cooling fluid of the lower reaches in gaps 42 to the cooling fluid in the upper stream in the flow path 41. The difference between the temperature of the cooling fluid (air or gas) immediately before the passage of the gaps 42 and the temperature of the cooling fluid after being turned over and immediately flowing into the air electrode 24 or the fuel electrode 25 is very small (Both temperatures are roughly 950 °C), which corresponds to a heat quantity Q3. On the other hand, the difference of the temperature of the cooling fluid immediately after flowing into the gaps 42 and the temperature of the cooling fluid in the air electrode 24 or the fuel electrode 25 in the fuel cell which is in a corresponding position (straightly below) is very large (675 °C and 1050 °C), which corresponds to the heat quantity Q1. The difference between the temperature of cooling fluid immediately before passing through the flow path 41 and the temperature of the cooling fluid after being turned over and immediately after flowing into the gaps 42 is very small (both temperatures are roughly 675 °C), which corresponds to the heat quantity q3. On the other hand, the difference of the temperature of the cooling fluid immediately after flowing into the flow path 41 and the temperature of the cooling fluid in the gaps 42 in a position corresponding to it (straightly below) is very large (400 °C and 950 °C), which corresponds to the heat quantity q1. In this way, the heat quantities qi and Qi have distributions depending on the position, but the total $\Sigma qi$ is equal to the total $\Sigma Qi$, moves and is collected by the fluid.

To cool the air electrode 24 or the fuel electrode 25, it should pour cold fluid into the path which contacts the air electrode 24 or the fuel electrode 25 directly. However, the above-mentioned path is set such that the fluid of 950 °C (a desired temperature) flows in the air electrode 24 or the fuel electrode 25. In the above, the number of times (the number of stages) of the turning-over is set to twice but the number of times of the turning-over is not limited to twice, but may be set optionally to for the above fluid to be set to the desired temperature. Moreover, the means of turning over (going and returning) fluid in the method of heating fluid shown in Figs. 10A to 10C is not limited to the assembly segment support 40, of course.

Next, referring to Fig. 11, the fuel cell apparatus according to the second embodiment of the present invention will be described. Each of the electrolyte films 33, the fuel electrodes 35 and the inter-connectors 36 in the unit cell 30 is formed in a flat plate shape. In Fig. 11, the air electrode 34 may have a flat plate shape together with an inter-connector 36 (or the segment support member 38: not shown) which is provided on the upper surface 34u of the air electrode 34. A segment support member 38 is provided under the inter-connector 36 to contact the inter-connector 36. The segment support member 38 is formed to have the waveform. The segment support member 38 is formed to have the continuous waveform (almost sine wave) which has a predetermined period and a predetermined amplitude.

A part of the upper surface 38u of the segment support member 38 contacts the lower surface 36d of the inter-connector 36. A flow path S3 is formed between the non-contact portion of the lower surface 36d of the inter-connector 36 with the upper surface 38u of the segment support member 38 and the upper surface 38u of the segment support member 38. The fluid of either of the air, the fuel (methane), steam and the mixture of the fuel is supplied to the flow path S3. The above fluid supplied to the flow path S3 cools the fuel electrode 35 indirectly through the inter-connector 36.

The lower surface 38d of the segment support member 38 contacts a part of the inter-connector 36 which is provided outside the air electrode 34 of the unit cell 30 (not shown) in the lower stage. A flow path S4 is formed between the non-contact portion of the lower surface 38d of the segment support member 38 with and the inter-connector 36 outside the air electrode 34 and the inter-connector 36 outside the air electrode 34. The fluid of either of air, fuel (methane), steam and mixture of the fuel is supplied to the flow path S4. The above fluid supplied to the flow path S4 may be the same kind as that of the above fluid supplied to the flow path S3. Or, the above fluid supplied to the flow path S4 may be the kind different from that of the above fluid supplied to the flow path S3. The above fluid supplied to the flow path S4 cools the air electrode 34 indirectly through the inter-connector 36.

Fig. 12A is a cross sectional view showing a first modification of the unit cell structure of the fuel cell apparatus according to the second embodiment of the present invention. As shown in Fig. 12A, the inter-connector 36 is not provided on the side of the air electrode 34 and the upper surface 34u of the air electrode 34 may be formed to have the waveform meeting the shape of the segment support member 38 in the upper stage.

Fig. 12B is the cross sectional view showing a second modification of the unit cell structure of the fuel cell apparatus according to the second embodiment of the present invention. As shown in Fig. 12B, the segment support member 38 is formed such that the opening area (cross section) of the flow path S3 is larger than the opening area of the flow path S4, different from the structures shown in Figs. 11 and 12A. This is because the exothermic quantity is larger in the fuel electrode than in the air electrode and the fuel electrode is necessary to cool intensively, when the fuel cell apparatus operates. By changing the shape of the segment support member 38, the quantity of the above fluid which is put in the flow path S3 and the flow path S4 can be optionally set.

It should be noted that in the first embodiment of the present invention, the shape of the waveform structural section 20A may be formed such that the opening area of the flow path S1 is larger than the opening area that the flow path S2. The air electrode 24 of the first embodiment may be formed to have a waveform section from the point of view like Fig. 12B.

As shown in Fig. 13, the unit cells 30 may be stacked such that the segment support members 38 have almost the same phase. Or, Although being not shown, the unit cells 30 may be stacked such that the phases of the segment support members 38 are different from each other by about 180 degrees like the plover shape.

As shown in Figs. 14A-1 to 14a-3 and 14B-1 to 14B-3, the section shape of the segment support member 38 may be a waveform or a polygon shape (rectangular (pulse like), trapezoid). Moreover, the shapes of the segment support members 38 may be not same such that the ratio of the opening area of the flow path S3 and the flow path S4 is optional. Moreover, the shape of the segment support member is not limited to ones shown in Figs. 14A-1 to 14a-3 and 14B-1 to 14B-3. Any type of shape may be permitted if a flow path (gap) for the cooling fluid is formed by the inter-connector 36 or air electrode 34 of a flat plate shape. In the above, the structures shown in Figs. 1 to 14B-3 may be appropriately used in any combination of them.

Such a fuel cell apparatus can be applied to the plant shown in Fig. 15 to improve the efficiency of the power generation.

According to the present invention, the problem of the cooling of the fuel cell apparatus does not occur even if there is little quantity of air to be supplied.

**Claims**

1. A fuel cell apparatus comprising:

   a fuel cell main unit comprising an electrolyte film, an air electrode and a fuel electrode; and an electrically conductive member electrically connected with said fuel cell main unit, and

   wherein flow paths for fluid to cool said fuel cell main unit is provided between said fuel cell main unit and said conductive member.

2. The fuel cell apparatus according to claim 1, wherein said fluid is one of air, fuel supplied to said fuel electrode, mixture of said air and said fuel.

3. The fuel cell apparatus according to claim 1 or 2, wherein a specific surface of said fuel cell main unit has a contact portion which contacts said conductive member and a non-contact portion which does not contact said conductive member, and
   said flow path is formed between said conductive member and said non-contact section.

4. The fuel cell apparatus according to any of claims 1 to 3, wherein when a first of said fuel cell apparatus and a second one of said fuel cell apparatus are stacked to be adjacent to each other, said conductive member of said first fuel cell apparatus forms first ones of said flow paths for said fluid to cool one of said air electrodes and said fuel electrodes in said first fuel cell apparatus, and second ones of said flow paths of said fluid to cool the other of said air electrode and said fuel electrode in said second fuel cell apparatus.

5. The fuel cell apparatus according to claim 4, wherein said first flow path and said second flow path are different from each other in capacity.

6. The fuel cell apparatus according to claim 4 or 5, wherein one of said fuel cell main unit and said conductive member are formed to have almost a waveform,
   the other of said fuel cell main unit and said conductive member is formed in a flat plate shape,
   said first and the second fuel cell apparatuses are stacked such that a first wave corresponding to said one of said fuel cell main unit and said conductive member in said first fuel cell apparatus has the same phase as a second wave corresponding to said one of said fuel cell main unit and said conductive member in said second fuel cell apparatus.

7. The fuel cell apparatus according to claim 6, wherein said first and second fuel cell apparatuses are stacked such that the phase of said first wave and the phase of said second wave are shifted by 180 degrees.

8. The fuel cell apparatus according to any of claims 4 to 7, wherein holes are formed in said conductive member to connect said first flow path and said second flow path.

9. The fuel cell apparatus according to any of claims 4 to 8, wherein a first direction when said fluid flows through said first flow path is same as a second direction when said fluid flows through said second flow path.

10. The fuel cell apparatus according to any of claims 4 to 8, wherein a first direction when said fluid flows through said first flow path is different from a second direction when said fluid flows through said second flow path.

11. The fuel cell apparatus according to any of claims 4 to 8, wherein said fluid flows through said first flow path in a first direction, and then flows through said second flow path in a second direction which is opposite to said first direction.

12. The fuel cell apparatus according to any of claims 1 to 8, wherein said flow path is divided into a first region and a second region, and
    said fluid flows through said first region in a first direction, and then flows through a second region in a second direction which is opposite to said first direction.

13. The fuel cell apparatus according to claim 12, wherein a division member is provided for said flow path to divide said flow path into a first region and a second region, and
    a shape of an opening of said flow path is almost common to an external shape of said division member exposed from said opening to keep the shape of said opening of said flow path.

14. The fuel cell apparatus according to any of claims 4 to 11, wherein said first fluid flows through said first flow path flows and then flows into said one of said air electrode and said fuel electrode in said first fuel cell apparatus,
    said second fluid flows through said second flow path and then flows into said other of said air electrode and said fuel electrode in said second fuel cell apparatus,

said first fluid is fluid necessary for the fuel cell to react in said one, and

said second fluid is fluid necessary for the fuel cell to react in said other.

**15.** The fuel cell apparatus according to claim 14, wherein each of said first and second flow paths is divided into a first region and a second region,

said first fluid flows into said first region of said first flow path in a first direction and then flows into said second region of said first flow path in a second direction which is opposite to said first direction, when said first fluid flows through said first flow path, and

said second fluid flows into said first region of said second flow path in a third direction and then flows into said second region of said second flow path in a fourth direction which is opposite to said third direction, when said first fluid flows through said first flow path.

**16.** The fuel cell apparatus according to claim 14 or 15, wherein a temperature of said first fluid is set to a first set temperature such that a first temperature when said first fluid flows through said first flow path and is heated through cooling said one is equal to said first setting temperature, and

a temperature of said second fluid is set to a second set temperature such that a second temperature when said second fluid flows through said second flow path and is heated through cooling said other is equal to said second setting temperature.

**17.** A method of cooling a fuel cell, comprising the steps of:

(a) providing a fuel cell comprising an electrolyte film, an air electrode and a fuel electrode;
(b) forming a first flow path in a position on a side of said air electrode;
(c) forming a second flow path in a position on a side of said fuel electrode;
(d) supplying air to said first flow path to cool said air electrode;
(e) supplying fuel to said second flow path to cool said fuel electrode;
(f) supplying said air used to cool said air electrode to said air electrode to directly use for reaction of said fuel cell;
(g) supplying said fuel used to cool said fuel electrode to said fuel electrode to directly use for reaction of said fuel cell;
(h) setting a temperature of said air supplied to said first flow path in said step (d) to a temperature which is suitable for the use in said step (f); and

(i) setting a temperature of said fuel supplied to said second flow path in said step (e) to a temperature which is suitable for the use in said step (g).

# Fig. 1

UNIT
SEGMENT

20A

28

S2    24u    S2    20

24

23

25

28d    S1    28u    S1    26d    26

REPETITION OF SEGMENTS

# Fig. 2A

UNIT
SEGMENT

20A

REPETITION OF SEGMENTS

# Fig. 2B

# Fig. 2C

26  S2  24u  S2  28

24

23

25

28  28d  S1  28u  S1  26d

26

REPETITION OF SEGMENTS

# Fig. 2D

25  S1

24

28

23

28

24

23

25  S1

14

# Fig. 3

# Fig. 4

26 AT UPPER STAGE

REMAINING $O_2$ $N_2$

20

24

25

AIR

$4e^-$

$O_2$

20$^-$

23

UNIT SEGMENT

CONDUCTIVE

20$^-$ $4e^-$ $O_2$

$CH_4(+H_2O)$

$CO_2$ $H_2O$ $CH_4$

26

25a: INTERNAL REFORMING REGION ($CO$, $H_2$, $CH_4$, $H_2O$)

REPETITION OF SEGMENTS

$$O_2 + 4e^- \rightarrow 2O^-$$

EP 1 429 405 A1

# Fig. 5A

# Fig. 5C

# Fig. 5B

# Fig. 5D

# Fig. 5E

20A

UNIT

20A

FLOW PATH OF
UNIFORM WIDTH
SL1

# Fig. 5F

20A

S1t

UNIT

NUMEROUS TUBULAR
FLOW PATH
SL2

S2t

20A

Ｆｉｇ．６Ａ

B

B

20A

Ｆｉｇ．６Ｂ

20A

D

D

Ｆｉｇ．６Ｃ－１    WAVEFORM

Ｆｉｇ．６Ｃ－２

POLYGONAL FORM

Ｆｉｇ．６Ｃ－３

Ｆｉｇ．６Ｃ－４    TRIANGULAR FORM

# Fig. 7A

FORWARD FLOW

# Fig. 7B

BACKWARD FLOW

# Fig. 7C

TURNING-OVER FLOW

EP 1 429 405 A1

# Fig. 8

FUEL ELECTRODE
HEAT TRANSFER
DESIGN

AIR ELECTRODE
HEAT TRANSFER DESIGN

# Fig. 9A

40a

28

42

41

S2

40b

S1

# Fig. 9B

26

40

S1

28

24

40

Fig. 10A

Fig. 10B

Fig. 10C

HEAT EXCHANGE QUANTITY: $\Sigma q_i = \Sigma Q_i$

AT TEMPERATURE OF $\left( q_1 > q_2 > q_3 \right)$
HEAT SOURCE SIDE: $\left( Q_1 > Q_2 > Q_3 \right)$

| HEAT TRANSFER AREA | SMALL | LARGE |
|---|---|---|
| ⋮ | ⋮ | ⋮ |

# Fig. 11

Fig. 12A

Fig. 12B

# Fig. 13

Fig. 14A-1 —— WAVEFORM

Fig. 14A-2 —— POLYGONAL FORM

Fig. 14A-3 ——

UNIFORM

Fig. 14B-1 —— WAVEFORM

Fig. 14B-2 —— POLYGONAL FORM

Fig. 14B-3 ——

NOT UNIFORM

EP 1 429 405 A1

# Fig. 15

# INTERNATIONAL SEARCH REPORT

| | International application No. |
|---|---|
| | PCT/JP01/08148 |

**A. CLASSIFICATION OF SUBJECT MATTER**
Int.Cl$^7$ H01M8/02

According to International Patent Classification (IPC) or to both national classification and IPC

**B. FIELDS SEARCHED**

Minimum documentation searched (classification system followed by classification symbols)
Int.Cl$^7$ H01M8/02

Documentation searched other than minimum documentation to the extent that such documents are included in the fields searched
| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 5145754 A (NGK Insulators, Ltd.),<br>08 September, 1992 (08.09.1992),<br>Column 3, line 53 to Column 8, line 61<br>& JP 3-238762 A<br>Claims; page 3, upper right column, line 11 to page 6,<br>upper left column, line 6 | 1-7,9-17<br>8 |
| X<br>Y | Microfilm of the specification and drawings annexed to<br>the request of Japanese Utility Model Application<br>No.50936/1985 (Laid-open No.167377/1986)<br>(Ishikawajima-Harima Heavy Industries Co., Ltd.),<br>17 October, 1986 (17.10.1986),<br>Claims of Utility Model; page 4, line 19 to page 9,<br>line 2 (Family: none) | 1-14,16-17<br>15 |
| X<br><br>Y<br>A | JP 57-158963 A (Hitachi, Ltd.),<br>30 September, 1982 (30.09.1982),<br>page 2, upper left column, line 10 to page 3, upper right<br>column, line 5 (Family: none) | 1-7,10-12,<br>14-17<br>8,15<br>9,13 |

☒ Further documents are listed in the continuation of Box C.　☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>18 December, 2001 (18.12.01) | Date of mailing of the international search report<br>25 December, 2001 (25.12.01) |
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| | International application No. |
|---|---|
| | PCT/JP01/08148 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 61-128469 A (Hitachi, Ltd.), | 1-4,6-10,14, |
| | 16 June, 1986 (16.06.1986), | 16-17 |
| Y | page 2, upper right column, line 15 to page 3, lower right | 5 |
| A | column, line 9   (Family: none) | 8,11-13,15 |
| | | |
| X | JP 7-135000 A (Mitsubishi Heavy Industries, Ltd.), | 1-4,6-7, |
| | 23 May, 1995 (23.05.1995), | 9-10,14,16-17 |
| Y | Full text   (Family: none) | 5 |
| A | | 8,11-13,15 |
| | | |
| X | JP 2-273465 A (NKK Corporation), | 1-7,9-10,14, |
| | 07 November, 1990 (07.11.1990), | 16-17 |
| A | Full text   (Family: none) | 8,11-13,15 |
| | | |
| X | JP 2-253564 A (Toshiba Corporation), | 1-4,9-12,14-17 |
| | 12 October, 1990 (12.10.1990), | 5 |
| Y | Full text   (Family: none) | 6-8,13 |
| A | | |
| | | |
| X | JP 6-36780 A (Hitachi, Ltd.), | 1-5,14,16-17 |
| Y | 10 February, 1994 (10.02.1994), | 8 |
| A | page 4, left column, line 4 to page 5, right column, | 6-7,9-13,15 |
| | line 3   (Family: none) | |
| | | |
| Y | JP 63-279574 A (Ishikawajima-Harima Heavy Industries | 5 |
| | Co., Ltd.), | |
| | 16 November, 1988 (16.11.1988), | |
| | page 3, lower right column, line 16 to page 5, lower left | |
| | column, line 17; Fig. 3   (Family: none) | |

Form PCT/ISA/210 (continuation of second sheet) (July 1992)

| **INTERNATIONAL SEARCH REPORT** | International application No. |
| --- | --- |
| | PCT/JP01/08148 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

    See the extra sheet.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.
                         ☐    No protest accompanied the payment of additional search fees.

Form PCT/ISA/210 (continuation of first sheet (1)) (July 1992)

**INTERNATIONAL SEARCH REPORT**

International application No.

PCT/JP01/08148

<u>Continuation of Box No. II of continuation of first sheet (1)</u>

Document 1: US 5145754 A (NGK Insulators, Ltd.),
08 September, 1992 (08.09.92),
column 3, lines 53 to column 8, line 61
& JP 3-238762 A
Claims; page 3, upper right column, line 11 to page 6, upper left column,
line 6

Document 2: Microfilm of the specification and drawings annexed to the request
of Japanese Utility Model Application
No. 50936/1985 (Laid-open No. 167377/1986),
(Ishikawajima-Harima Heavy Industries Co., Ltd.),
17 October, 1986 (17.10.86), Claims of Utility Model;
page 4, line 19 to page 9, line 2
(Family: none)

Document 3: JP 57-158963 A (Hitachi, Ltd.),
30 September, 1982 (30.09.82),
page 2, upper left column, line 10 to page 3, upper right column, line 5
(Family: none)

A feature common to claims 1-4, 12 is a fluid flow path provided, for
cooling a fuel cell body, between the fuel cell body and a conductive member
(claim 1). Our search has revealed that that fluid flow path is disclosed
in the above documents 1-3 and therefore is not evidently novel. Accordingly,
the fluid flow path is not beyond a prior art level and the common feature
is not a special technical feature.
Since there exists no special technical features required for the group
of inventions described in the claims to fulfil the requirement of unity of
invention, inventions in claims 1-4 and 12 do not fulfill the requirement
of unity of invention.

A feature common to claims 4-6, 8-11, 14 is what is described in claim
4. Our search has revealed that what is described in claim 4 is disclosed
in the above documents 1-3 and therefore is not evidently novel. Accordingly,
the description in claim 4 is not beyond a prior art level and the common
feature is not a special technical feature.
Since there exists no special technical features required for the group
of inventions described in the claims to fulfil the requirement of unity of
invention, inventions in claims 4 -6, 8-11 and 14 do not fulfill the requirement
of unity of invention.

A feature common to claims 12-13 is what is described in claim 12. Our
search has revealed that what is described in claim 12 is disclosed in the
above documents 1-2 and therefore is not evidently novel. Accordingly, the
description in claim 12 is not beyond a prior art level and the common feature
is not a special technical feature.
Since there exists no special technical features required for the group
of inventions described in the claims to fulfil the requirement of unity of
invention, inventions in claims 12-13 do not fulfill the requirement of unity
of invention.

A feature common to claims 14-17 is what is described in claim 14. Our
search has revealed that what is described in claim 14 is disclosed in the
above documents 1-3 and therefore is not evidently novel. Accordingly, the
description in claim 14 is not beyond a prior art level and the common feature
is not a special technical feature.
Since there exists no special technical features required for the group
of inventions described in the claims to fulfil the requirement of unity of
invention, inventions in claims 14-17 do not fulfill the requirement of unity
of invention.

Form PCT/ISA/210 (extra sheet) (July 1992)